# EUROPÄISCHE PATENTANMELDUNG

(11) **EP 2 191 984 A2**
(43) Veröffentlichungstag der Anmeldung: **02.06.2010**
(21) Anmeldenummer: 09174408.6
(22) Anmeldetag: 29.10.2009
(51) Int. Cl.: B60C 11/12, B60C 11/04

(54) **Fahrzeugluftreifen**

(30) Priorität: 26.11.2008 DE 102008037592
(71) Anmelder: Continental Reifen Deutschland GmbH, 30165 Hannover (DE)
(72) Erfinder: Ackermann, Lutz, 38539, Müden (DE); Weber, Christian, 30826, Garbsen (DE); Lange, Bernd, 31675, Bückeburg (DE)
(74) Vertreter: Finger, Karsten

(57) **Zusammenfassung**

Die Erfindung betrifft einen Fahrzeugluftreifen, insbesondere für Nutzfahrzeuge, mit einem profilierten Laufstreifen, welcher durch eine Anzahl von in Umfangsrichtung umlaufenden Umfangsrillen (5) in Profilpositive, wie Profilbänder oder Profilblockreihen, gegliedert ist.

Zumindest eine Umfangsrille (5) ist in radialer Richtung aus zwei Rillenabschnitten (5a,5b) zusammengesetzt, wobei der der Laufstreifenoberfläche benachbarte erste Rillenabschnitt (5a) eine Breite aufweist, die höchstens 7 mm beträgt und geringer ist als die Breite des zweiten Rillenabschnittes (5b), welcher eine Querschnittsfläche aufweist, die über mindestens 80% der Umfangslänge der Umfangsrille (5) zumindest das Zweifache der Querschnittsfläche des ersten Rillenabschnittes (5a) beträgt.

## Beschreibung

Die Erfindung betrifft einen Fahrzeugluftreifen, insbesondere für Nutzfahrzeuge, mit einem profilierten Laufstreifen, welcher durch eine Anzahl von in Umfangsrichtung umlaufenden Umfangsrillen in Profilpositive, wie Profilbänder oder Profilblockreihen, gegliedert ist.

Die Umfangsrillen in Laufstreifenprofilen von Nutzfahrzeugreifen sind üblicherweise als breite Rillen ausgeführt, deren Rillenflanken gegenüber der radialen Richtung geneigt sind, derart, dass die Breite der Umfangsrillen vom Nutgrund bis zur Laufstreifenoberfläche größer wird. Beim Betrieb des Reifens entstehen infolge von Verschiebungen und Dehnungen des Gummimaterials am Grund der Umfangsrillen Spannungen, insbesondere beim Einlaufen in die und beim Auslaufen aus der Bodenaufstandsfläche. Diese Spannungen führen zu Verformungen im Bereich des Rillengrundes und können ein Entstehen von Rissen am Rillengrund zur Folge haben, wobei die Anfälligkeit für das Entstehen von Rissen umso größer ist, je größer die Verformungen des Gummimaterials im Bereich des Rillengrundes sind. Es wurden bereits Maßnahmen vorgeschlagen, die das Entstehen von Rissen am Rillengrund vermeiden sollen. So ist es beispielsweise bekannt, dass eine Verbreiterung der Schulterrippen im Laufstreifen von Nutzfahrzeugreifen das Entstehen von Einrissen am Rillengrund der den Schulterrippen benachbarten Umfangsrillen zwar verringert, aber die Haltbarkeit des Reifens durch eine höhere Temperatur in der Reifenschulter verringert.

Der Erfindung liegt die Aufgabe zugrunde, in Laufstreifen von Nutzfahrzeugreifen das Entstehen von Einrissen am Rillengrund von Umfangsrillen deutlich zu verringern ohne sonstige Laufstreifeneigenschaften zu beeinträchtigen.

Gelöst wird die gestellte Aufgabe erfindungsgemäß dadurch, dass zumindest eine Umfangsrille in radialer Richtung aus zwei Rillenabschnitten zusammengesetzt ist, wobei der der Laufstreifenoberfläche benachbarte erste Rillenabschnitt eine Breite aufweist, die höchstens 7 mm beträgt und geringer ist als die Breite des zweiten Rillenabschnittes, welcher eine Querschnittsfläche aufweist, die über mindestens 80% der Umfangslänge der Umfangsrille zumindest das Zweifache der Querschnittsfläche des ersten Rillenabschnittes beträgt.

Der dieser speziellen erfindungsgemäßen Rillengeometrie zugrunde liegende Gedanke besteht darin, im radial äußeren Bereich -in dem der Laufstreifenprofiloberfläche benachbarten Rillenabschnitt- sicherzustellen, dass beim Abrollen des Reifens unter Belastung beim Durchlaufen durch die Bodenaufstandsfläche die Rillenflanken in einen gegenseitigen Kontakt kommen, wodurch ein Abstützungseffekt entsteht, welcher eine Entlastung des Rillengrundes zur Folge hat. Im zweiten, wesentlich voluminöser ausgeführten Rillenabschnitt werden die auftretenden Spannungen deutlich reduziert. Würde die Umfangsrille über ihre gesamte Radialerstreckung gemäß dem ersten Rillenabschnitt ausgeführt sein, käme es am Rillengrund zu hohen Kerbspannungsspitzen, die wiederum Risse am Rillengrund zur Folge hätten.

Ein besonders guter Abstützungseffekt lässt sich mit Ausführungen der Umfangsrille erzielen, bei welchen der erste Rillenabschnitt eine Breite aufweist, die mindestens 1 mm und höchstens 4 mm beträgt.

Eine weitere Maßnahme, die mit einen guten Abstützungseffekt und damit einer Entlastung des Rillengrundes einhergeht, besteht darin, dass der erste Rillenabschnitt über mindestens 50 % seiner radialen Erstreckung eine konstante Breite aufweist. Dabei sollte sich der erste Rillenabschnitt in radialer Richtung bis in eine Tiefe erstrecken, die zwischen 20 % und 80 %, bevorzugt 30 % bis 60 %, der Profiltiefe beträgt.

Die gegenseitige Abstützung der Rillenflanken im ersten Rillenabschnitt sollte über den Umfang des Reifens weitgehend möglich sein. Es ist daher günstig, wenn der erste Rillenabschnitt über mindestens 50 % der Umfangslänge der Umfangsrille eine konstante Tiefe aufweist.

Die Querschnittsfläche des zweiten, wesentlich voluminöser ausgeführten Rillenabschnittes kann bis zum 15-Fachen der Querschnittsfläche des ersten Rillenabschnittes betragen, wobei die gewünschte Entlastung des Rillengrundes erhalten bleibt. Dieser Rillenabschnitt kann ferner eine Querschnittsfläche aufweisen, die im Wesentlichen rechteckig, quadratisch, kreisförmig, oval, dreieckig oder dergleichen ausgeführt ist.

Der Rillengrund im breiten Rillenabschnitt wird dann besonders effektiv entlastet, wenn die Umfangsrille über den Reifenumfang gerade verläuft. Soll die Umfangsrille in Reifenumfangsrichtung zick-zack-artig verlaufen, ist es von Vorteil, wenn die durch diese Zick-Zack-Form gebildeten Abschnitte der Umfangsrille einen Winkel von maximal 45° mit der Umfangsrichtung einschließen.

Zur Unterstützung der Belüftung und Kühlung des breiten Rillenabschnittes ist es vorteilhaft, wenn die Umfangsrille, insbesondere in Abständen von 3 cm bis 10 cm, durch bispielsweise trichterförmig ausgeführte Öffnungen unterbrochen ist, welche an der Laufstreifenoberfläche einen maximalen Durchmesser aufweisen, der zwischen dem 1,5-Fachen und dem 20-Fachen der Maximalbreite des ersten Rillenabschnittes beträgt.

Die Wand der vorgesehenen Öffnungen kann von zumindest einem treppenartigen Absatz umlaufen sein, welcher als Steinabweiser wirkt und eingefangene Steine wieder nach außen befördert.

Weitere Merkmale, Vorteile und Einzelheiten der Erfindung werden nun anhand der Zeichnung, die in schematischer Weise Ausführungsbeispiele darstellt, näher beschrieben. Dabei zeigen
Fig. 1 eine Draufsicht auf eine Teilabwicklung eines Laufstreifens für einen Fahrzeugluftreifen für Nutzfahrzeuge,
Fig. 2 eine vergrößerte Schnittdarstellung entlang der Linie II-II der Fig. 1,
Fig. 3 eine Draufsicht auf eine weitere Ausführungsform einer Umfangsrille gemäß der Erfindung und
Fig. 4 einen axialen Schnitt durch eine Umfangsrille mit einer weiteren Ausführungsvariante der Erfindung.

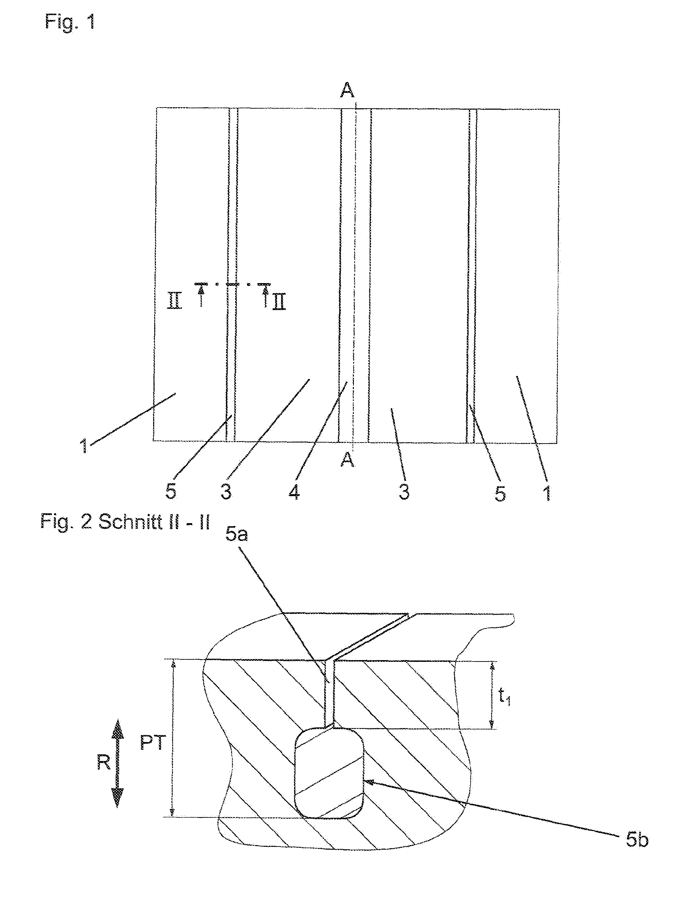

Der beispielhaft und schematisch in Fig. 1 gezeigte Laufstreifen für einen LKW-Reifen in Radialbauart weist als Profilpositive zwei Schulterbänder 1 und zwei mittlere Bänder 3 auf. Entlang des Reifenäquators A-A verläuft eine breite und in Umfangsrichtung gerade umlaufende Umfangsrille 4, welche die beiden Bänder 3 voneinander trennt. Jedes Band 3 ist von dem ihm benachbarten Schulterband 1 durch eine weitere, in Umfangsrichtung des Reifens gerade umlaufende Umfangsrille 5 getrennt. Wie Fig. 1 in Verbindung mit der Schnittdarstellung in Fig. 2 zeigt, setzt sich die Umfangsrille 5 in radialer Richtung (Doppelpfeil R) aus zwei Rillenabschnitten 5a und 5b zusammen. Der an die Laufstreifenoberfläche anschließende Rillenabschnitt 5a weist eine vorzugsweise über mindestens 50 % seiner radialen Erstreckung konstante Breiten b auf, welche zwischen 1 mm und 7 mm, vorzugsweise bis zu 4 mm, beträgt, und reicht bis auf eine über den Reifenumfang - über mindestens 50% der Umfangslänge der Umfangsrille 5 - konstant bleibende Tiefe t₁, welche zwischen 20 % und 80 %, vorzugsweise 30% bis 60%, der Profiltiefe PT beträgt. Der Rillenabschnitt 5a mündet mittig in den Rillenabschnitt 5b, welcher eine Querschnittsfläche aufweist, deren Größe mindestens das Zweifache und maximal das Fünfzehnfache der Größe der Querschnittsfläche des Rillenabschnittes 5a beträgt. Die Querschnittsfläche des Rillenabschnittes 5b ist im Wesentlichen rechteckig oder quadratisch mit gerundeten Ecken, ihre in axialer Richtung - senkrecht zur radialen Richtung - ermittelte größte Breite B beträgt mindestens 3 mm und höchstens 20 mm. Abweichend von den dargestellten annähernd rechteckigen Querschnittsform kann der Rillenabschnitt 5b auch eine andere Querschnittsform, beispielsweise eine ovale oder annähernd dreieckige Querschnittsform, aufweisen. Es ist auch möglich, die Breite b des Rillenabschnittes 5a innerhalb der oben erwähnten Abmessungen zu variieren, beispielsweise indem der Rillenabschnitt 5a in Richtung zur Profiloberfläche breiter wird.

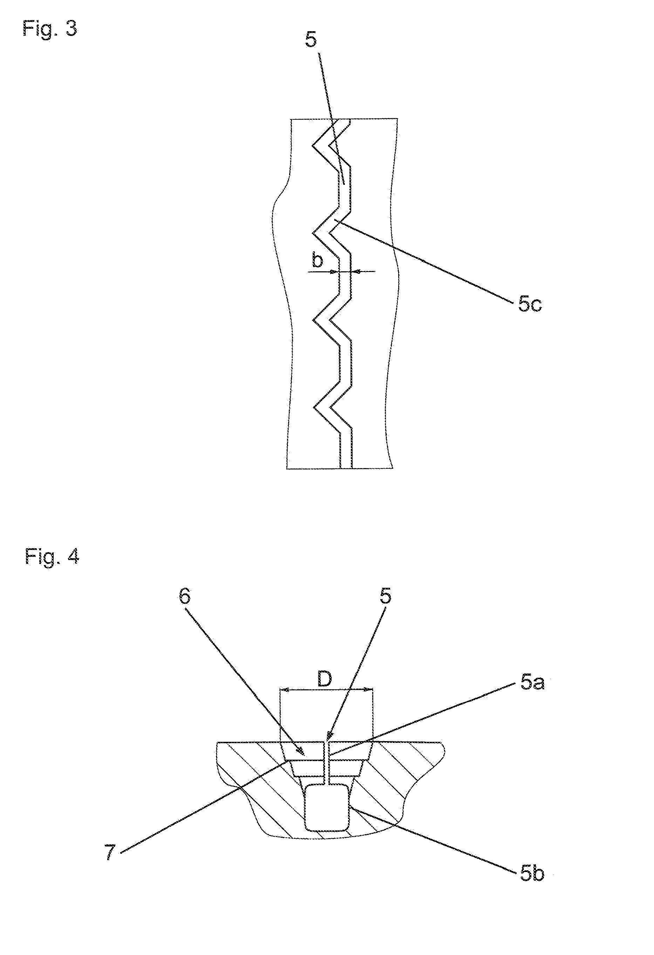

Fig. 3 zeigt eine Draufsicht auf eine in einer Art Zick-Zack-Form verlaufenden Umfangsrille 5, die in radialer Richtung mit Rillenabschnitten 5a, 5b, analog Fig. 1, ausgeführt ist. Die Rille 5 setzt sich aus Umfangsabschnitten 5c zusammen, welche übereinstimmende Breiten b aufweisen und unter einem Winkel von maximal 45° zur Umfangsrichtung verlaufen. Es ist möglich, die Rille 5 derart auszuführen, dass ihre Umfangsabschnitte 5c unterschiedliche Breiten aufweisen.

Fig. 4 zeigt eine Ausführungsvariante mit einer gemäß Fig. 1 und 2 ausgeführten und mit Rillenabschnitten 5a und 5b versehenen Umfangsrille 5, wobei die Rille 5 in Abständen von 3 cm bis 10 cm jeweils durch eine trichterförmige Öffnung 6 unterbrochen ist. Die trichterförmigen Öffnungen 6 weisen an der Laufstreifenprofiloberfläche einen Durchmesser D auf, welcher das Eineinhalb- bis Zwanzigfache der Breite b des Rillenabschnittes 5a beträgt. Der Durchmesser D der trichterförmigen Öffnungen 6 verringert sich in Richtung zum Nutgrund. Optional können in der Wand der Öffnung 6 treppenförmige Absätze 7 ausgebildet sein, welche die Öffnung 6 umlaufen und als Steinabweiser wirken, wobei die Anzahl der Absätze 7 insbesondere bis zu drei beträgt. Die Öffnungen 6 können in Draufsicht ferner eine von der Kreisform abweichende Form aufweisen, beispielsweise oval ausgeführt sein.

Die den Rillenabschnitt 5a begrenzenden Rillenflanken kommen beim Abrollen des Reifens, beim Durchlaufen der Bodenaufstandsfläche in gegenseitigen Kontakt, sie stützen sich aneinander ab und bewirken derart eine Entlastung des Rillengrundes im Rillenabschnitt 5b. Die optional vorgesehenen und die beschriebene Rillengeometrie unterbrechenden lokalen Öffnungen 6 unterstützen eine Belüftung und Kühlung der Rillenabschnitte 5b, was sich günstig auf die Gürtelhaltbarkeit auswirkt. Ein weiterer vorteilhafter Effekt der Öffnungen 6 ergibt sich bei der Herstellung des Reifens. Bei der Vulkanisation des Reifens in einer Reifenform stabilisieren die Formeinsätze zum Ausbilden der Öffnungen 6 die Formsegmente, insbesondere die lamellenartigen Elemente zum Ausformen der Rillenabschnitte 5a.

### Bezugszeichenliste

- 1: Schulterband
- 3: mittleres Band
- 4: Umfangsrille
- 5: Umfangsrille
- 5a: Rillenabschnitt
- 5b: Rillenabschnitt
- 5c: Umfangsabschnitt
- b: Breite
- t₁: Tiefe
- B: Breite
- 6: trichterförmige Öffnung
- 7: Absatz

## Patentansprüche

1. Fahrzeugluftreifen, insbesondere für Nutzfahrzeuge, mit einem profilierten Laufstreifen, welcher durch eine Anzahl von in Umfangsrichtung umlaufenden Umfangsrillen (4, 5) in Profilpositive, wie Profilbänder oder Profilblockreihen, gegliedert ist,
**dadurch gekennzeichnet,**
**dass** zumindest eine Umfangsrille (5) in radialer Richtung aus zwei Rillenabschnitten (5a, 5b) zusammengesetzt ist, wobei der der Laufstreifenoberfläche benachbarte erste Rillenabschnitt (5a) eine Breite (b) aufweist, die höchstens 7 mm beträgt und geringer ist als die Breite des zweiten Rillenabschnittes (5b), welcher eine Querschnittsfläche aufweist, die über mindestens 80% der Umfangslänge der Umfangsrille (5) zumindest das Zweifache der Querschnittsfläche des ersten Rillenabschnittes (5a) beträgt.

2. Fahrzeugluftreifen nach Anspruch 1, **dadurch gekennzeichnet, dass** der erste Rillenabschnitt (5a) eine Breite (b) aufweist, die mindestens 1 mm und höchstens 4 mm beträgt.

3. Fahrzeugluftreifen nach Anspruch 1 oder 2, **dadurch gekennzeichnet, dass** der erste Rillenabschnitt (5a) über mindestens 50% seiner radialen Erstreckung (t₁) eine konstante Breite (b) aufweist.

4. Fahrzeugluftreifen nach einem der Ansprüche 1 bis 3, **dadurch gekennzeichnet, dass** sich der erste Rillenabschnitt (5a) in radialer Richtung bis in eine Tiefe (t₁) erstreckt, die zwischen 20 % und 80 %, bevorzugt 30 % bis 60%, der Profiltiefe (PT) beträgt.

5. Fahrzeugluftreifen nach einem der Ansprüche 1 bis 4, **dadurch gekennzeichnet, dass** der erste Rillenabschnitt (5a) über mindestens 50% der Umfanglänge der Umfangsrille (5) eine konstante Tiefe (t₁) aufweist.

6. Fahrzeugluftreifen nach Anspruch 1, **dadurch gekennzeichnet, dass** die Querschnittsfläche des zweiten Rillenabschnittes (5b) bis zum Fünfzehnfachen der Querschnittsfläche des ersten Rillenabschnittes (5a) beträgt.

7. Fahrzeugluftreifen nach Anspruch 1 oder 6, **dadurch gekennzeichnet, dass** die Querschnittsfläche des zweiten Rillenabschnittes (5b) im Wesentlichen rechteckig, quadratisch, kreisförmig, oval, dreieckig oder dergleichen ist.

8. Fahrzeugluftreifen nach einem der Ansprüche 1 bis 7, **dadurch gekennzeichnet, dass** die Umfangsrille (5) über den Reifenumfang gerade verläuft.

9. Fahrzeugluftreifen nach einem der Ansprüche 1 bis 7, **dadurch gekennzeichnet, dass** die Umfangsrille (5) in Reifenumfangsrichtung zick-zack-artig verläuft, wobei ihre Abschnitte (5c) einen Winkel von maximal 45° mit der Reifenumfangsrichtung einschließen.

10. Fahrzeugluftreifen nach einem der Ansprüche 1 bis 9, **dadurch gekennzeichnet, dass** die Umfangsrille (5), insbesondere in Abständen von 3 cm bis 10 cm, durch Öffnungen (6) unterbrochen ist, welche an der Laufstreifenprofiloberfläche einen maximalen Durchmesser aufweisen, der zwischen dem 1,5-fachen und dem 20-fachen der Maximalbreite (b) des ersten Rillenabschnittes (5a) beträgt.

11. Fahrzeugluftreifen nach Anspruch 10, **dadurch gekennzeichnet, dass** sich die Öffnungen (6) in Richtung des Rillengrundes trichterförmig verschmälern.

12. Fahrzeugluftreifen nach Anspruch 10 oder 11, **dadurch gekennzeichnet, dass** die Wand der Öffnungen (6) von zumindest einem treppenartigen Absatz (7) umlaufen ist.
